# EUROPÄISCHE PATENTSCHRIFT

(11) **EP 0 548 342 B1**
(45) Veröffentlichungstag und Bekanntmachung des Hinweises auf die Patenterteilung: **02.04.1997**
(21) Anmeldenummer: 92915795.6
(22) Anmeldetag: 10.07.1992
(51) Int. Cl.: H05B 41/392, H05B 41/29

(54) **VORSCHALTGERÄT ZUM PULSBETRIEB VON GASENTLADUNGSLAMPEN**
FLUORESCENT LAMP BALLAST FOR PULSED-MODE OPERATION
BALLAST D'EXPLOITATION EN MODE PULSE DE LAMPES LUMINESCENTES A GAZ

(30) Priorität: 12.07.1991 DE 4123187
(43) Veröffentlichungstag der Anmeldung: 30.06.1993
(73) Patentinhaber: Tridonic Bauelemente GmbH, 6850 Dornbirn (AT)
(72) Erfinder: SPIEGEL, Norbert, A-6850 Dornbirn (AT); PABST, Wolfgang, A-6850 Dornbirn (AT)
(74) Vertreter: Schmidt-Evers, Jürgen, Dipl.-Ing.
(86) Internationale Anmeldenummer: EP9201566
(87) Internationale Veröffentlichungsnummer: WO9301695

(56) Entgegenhaltungen:
- EP-A- 0 271 396
- EP-A- 0 279 489
- EP-A- 0 439 864
- US-A- 4 373 146

## Beschreibung

Die Anmeldung betrifft ein Vorschaltgerät zum Pulsbetrieb von Gasentladungslampen gemäß dem Oberbegriff des Anspruches 1. Sie betrifft in gleicher Weise die Anwendung einer selbstschwingend oder fremdgesteuerten Halb- oder Vollbrückenschaltung, ebenfalls zum Pulsbetrieb von Gasentladungslampen.

Herkömmliche elektronische Vorschaltgeräte (EVG) dienen sowohl der verbesserten Helligkeitsregelung als auch einer erweiterten und schonenderen Zündmöglichkeit von Hoch- und Niederdruck-Gasentladungslampen (GE). Solche elektronische Vorschaltgeräte geben dabei eine Frequenz im Bereich 20kHz bis 70kHz an einen serienresonanten Lastkreis ab. Durch Verändern der Frequenz der Ausgangsspannung des EVG wird der Laststrom im Serienresonanzkreis kontinuierlich und stufenlos verstellbar. Die in dem Lastkreis angeordnete und vom Laststrom durchflossene Gasentladungslampe kann somit stufenlos in ihrer Helligkeit verändert werden. Gleichzeitig kann durch Annähern der Ausgangsfrequenz des EVG an die Resonanzfrequenz des Lastkreises bei ungezündeter Lampe eine hohe Spannung an der Lampe erzeugt werden, die diese zum Zünden bringt.

Ermöglichen derartige EVG's die komfortable Helligkeitsregelung und Zündung, so sind sie gleichwohl nicht dafür geeignet, die anderen Charakteristika einer Gasentladungslampe, wie Farbtemperatur oder Lichtausbeute (bewerteter Lichtstrom, Lumen/Watt) zu verändern.

Dies kann nun dadurch erreicht werden, daß eine Gasentladungslampe bei zwei verschiedenen, wesentlich unterschiedlichen Stromstärken periodisch betrieben wird. Zum einen wird ein hoher Stromwert für eine gewissse Zeitdauer der Lampe eingeprägt, zum anderen erlaubt man der Lampe eine Erholzeit bei wesentlich geringerem Haltestrom.

Dieser Zyklus wiederholt sich periodisch, so daß im Zeitmittel gewährleistet wird, daß die Lampe im leitenden Zustand bleibt und die Lampennennleistung P_{N} aufnimmt. Durch Verändern der Dauer der jeweiligen Zeitintervalle und der Amplitude der Strompulse während eines jeden Zeitintervalles kann man die Gasentladungslampen, insbesondere die Na-Hochdrucklampen, in ihrer Farbtemperatur und Lichtausbeute verändern. Diese Veränderung setzt bislang jedoch voraus, daß zur Erzielung unterschiedlicher Stromstärken für den Hauptpuls und den wesentlich geringeren Haltestrompuls die im Lastkreis angeordneten Drosseln durch zusätzliche Schalter umgeschaltet werden. Diese Schalter sind teuer und aufwendig.

Aus US-A-4,373,146 ist ein Verfahren zum Betreiben von Gasentladungslampen bekannt, wobei auf bekannte Art und Weise durch einen Wechselrichter eine von einem Gleichrichter gelieferte Gleichspannung in eine Wechselspannung umgesetzt und an eine Gasentladungslampe angelegt wird. Der Spannungsverlauf des Wechselrichters ist durch einen Rechteckspannungsgenerator vorgegeben, der wiederum von einem Sägezahnspannungsgenerator angesteuert wird, so daß die Frequenz des Rechteckspannungsgenerators gemäß dem sägezahnförmigen Spannungsverlauf des Sägezahnspannungsgenerators verändert wird, d.h. die Frequenz der von dem Rechteckspannungsgenerator gelieferten Rechteckimpulse wird kontinuierlich zwischen zwei vorgegebenen Frequenzwerten verändert, wobei sich dieser Frequenzänderungsvorgang periodisch mit der Periode der Sägezahnspannung des Sägezahnspannungsgenerators wiederholt.

Die Druckschrift EP-A-439 864 stellt für die vorliegende Anmeldung lediglich Stand der Technik nach Art. 54(3) EPÜ dar und beschreibt ebenfalls ein Verfahren zur Ansteuerung einer Gasentladungslampe, wobei die von einem HF-lmpulsstromgenerator gelieferten HF-Stromimpulse durch einen Modulator derart moduliert werden, daß die HF-Stromimpulse in Impulspaketen zusammengefaßt werden. Die Trägerfrequenz der einzelnen Impulspakete wird dabei nicht verändert.

Bei dem Verfahren gemäß der Druckschrift EP-A-279 489 wird ein Rechteckspannungssignal mit einer Frequenz von 100 Hz an eine Gasentladungslampe angelegt. Die Rechteckimpulse sind mit einer hohen Frequenz moduliert. Um die Gasentladungslampe zu zünden, wird die Modulationsfrequenz auf einen niedrigen Wert von ca. 8 kHz eingestellt. Nach dem Zünden nimmt die Modulationsfrequenz einen hohen Wert von ca. 80 kHz an. Während der Betriebsphase der Lampe ist somit der Lampenstrom stets durch eine konstante Modulationsfrequenz moduliert.

Gemäß der Druckschrift EP-A-271 396 werden Rechteckspannungsimpulse mit einer veränderbaren Frequenz an eine Gasentladungslampe angelegt, wobei die Frequenz der Spannungsimpulse zwischen 70 kHz und 160 kHz verändert wird, bis die Gasentladungslampe bei ihrer Resonanzfrequenz zündet. Die Frequenzänderung erfolgt periodisch steigend und fallend gemäß einer vorgegebenen Dreieckspannung. Nach dem Zünden der Lampe wird diese mit einer unterhalb ihrer Resonanzfrequenz liegenden konstanten Frequenz betrieben. Des weiteren zeigt diese Druckschrift die Verwendung einer einzigen Reaktanz in Reihe zu der Gasentladungslampe in einem elektronischen Vorschaltgerät.

Der Erfindung liegt die Aufgabe zugrunde, ein Vorschaltgerät zum Pulsbetrieb von Gasentladungslampen zu schaffen. bei dem die eingangs beschriebenen Probleme behoben sind.

Diese Aufgabe wird durch ein Vorschaltgerät mit den in Anspruch 1 angegebenen Merkmalen gelöst.

Mit dem erfindungsgemäßen Vorschaltgerät wird eine Gasentladungslampe periodisch mit Spannungsimpulsen versorgt, die über ein Steuersignal frequenzmodulierbar sind, wobei die Frequenzmodulation frequenzalternativ erfolgt. Für ein erstes Zeitintervall wird eine geringere erste Frequenz zum Anlegen eines höheren Hauptstromimpulses und eine höhere zweite Frequenz zum Anlegen eines niedrigeren Haltestromimpulses an die Gasentladungslampe angelegt, wobei die Frequenzalternation gemäß einer Alternationsfrequenz des Steuersignals erfolgt.

Erfindungsgemäß wird daher vorgeschlagen, ein Umschalten der Drosseln zu vermeiden und lediglich eine einzige Drossel vorzusehen, diese aber über mindestens ein Schalterelement oder - elementenpaar periodisch mit Spannungsimpulsen zu versorgen, wobei die Spannungsimpulse über ein Steuersignal frequenzmodulierbar sind. Damit wird eine Modulation der wirksamen Reaktanz des Lastkreises erzielt, wodurch der Laststrom, der auch durch die Gasentladungslampe fließt, gleichsam mit moduliert wird.

Eine weitere eigenständige Lösung des erläuterten Problems findet sich in der Anwendung der eingangs genannten Schaltungen zum Pulsbetrieb von Gasentladungslampen, vorzugweise bei einer Pulsationsfrequenz im Bereich von 50Hz bis 1000Hz, wobei die Gasentladungslampe in Serie mit einer Induktivität in einem Lastkreis angeordnet ist.

Hinter der erläuterten Lösung steht der Gedanke, die kurzzeitige Betriebsüberlastung der Lampen und die Haltestromphase über eine frequenzalternative, stufig ausgebildete Frequenzveränderung zu steuern. Als Mittelwert wird der Leistungs-Nennwert erreicht, so daß die Lampe thermisch zwar nicht überlastet wird, jedoch die Lichtausbeute und ihre Farbtemperatur verändert werden können.

Durch zusätzlichen Einfluß eines Pulsbreitenmodulators gemäß Anspruch 3 kann neben einer starken Veränderung der Frequenz im Rahmen der Frequenzmodulation gleichzeitig eine Pulsdauermodulation eingesetzt werden. Er erlaubt eine stetige Helligkeitsvariation der Lampe, da er durch Verändern der Einschaltzeiten die Amplituden der Stromstärken wesentlich verändern kann.

Ein zusätzlicher vorteilhafter Effekt liegt hinsichtlich der Verlustleitung darin, daß bei hohem zu schaltendem Laststrom die zugehörige Schaltfrequenz des Wechselrichters gering ist und die hierzu frequenzalternative (hohe) Frequenz, bei der der Haltestrom in der Gasentladungslampe fließt, die Schalter nicht wesentlich belastet. So kann auch eine hohe Schaltfrequenz von ihnen ohne weiteres geleistet werden.

Bei der Dimensionierung der einzigen Reaktanz wird für den Fall der frequenzalternativen, stufigen Frequenzänderung vorteilhaft eine solche Restwelligkeit des Lampenlaststromes i_{L} gewählt, daß gerade störende optische Wellen (Flackern) vermieden werden. Diese Grenzen liegen je nach Lampe zwischen 10% bis 30% und sind damit abhängig von dem jeweiligen Strommittelwert bzw. Stormeffektivwert. Auch hier stellt sich die gewählte Frequenzalternation als überraschend vorteilhaft dar, da gerade bei hoher Frequenz f2 und aktivem geringfügigem Haltestrom eine geringe Welligkeit erforderlich ist, die durch die hohe Frequenz auch gewährleistet werden kann. Bei reduzierter Frequenz f1, steigt der Laststrom an, womit der Hauptstrompuls beginnt und die Stromwelligkeit steigt, dabei steigt auch der Strommittelwert, bzw. - effektivwert, was letztlich wieder die Einhaltung der erforderlichen Grenzwerte gewährleistet, trotz geringer Frequenz f1 bei gleichem Drosselwert L1.

Vorteilhaft wird das erfundene Vorschaltgerät dadurch weitergebildet, daß die Modulationsform gemäß den Ansprüchen 2 bis 4 verschiedenartig, auch pulsbreitenmoduliert verändert wird. Besonders günstig ist der gemäß Anspruch 9 vorgesehene Polaritätswechsel, mit dem eine gleichmäßige Belastung der Elektroden der Gasentladungslampe sichergestellt ist. Schaltungstechnische Ausgestaltungen sind in den Ansprüchen 7 und 8 niedergelegt.

Anspruch 13 beschreibt eine Realisierung der kontinuierlich periodischen Frequenzalternation mit einem Wechselrichter, dessen Modulationstiefe gemäß Anspruch 14 der Amplitudendifferenz zwischen Stromhauptpuls und Haltestrompuls entsprechen kann.

Vorteilhaft zeigt Anspruch 16 eine lampenfreundliche Zündmöglichkeit, die durch Eingriff einer Steuerschaltung gewährleistet wird, mit der für eine lampen typische und wählbare Zündzeit T_{R} eine hohe wirksame Spannung an der Gasentladungslampe liegen kann.

Dabei wird die Anwendung der selbst- oder fremdgesteuerten Halb- oder Vollbrückenschaltung der Erfindung weiter dadurch ausgebildet, daß die beiden astabilen Betriebspunkte, der Hauptstrom- und der Haltestrompuls im Zeitmittel für eine lampentypische Nennleistung P_{N} in der Gasentladungslampe sorgen.

Nachfolgend zeigen Ausführungsbeispiele Konkretisierungen der umschriebenen Erfindung; es zeigen hierbei:
Figur 1 eine erste Wechselrichterschaltung mit möglichen Lampentypen,
Figur 2 eine zweite Wechselrichterschaltung in Halbbrückenschaltung mit denselben Lampentypen gemäß Figur 1,
Figur 3 eine Tiefsetzsteller-Schaltungsanordnung mit umschaltbaren Frequenzquellen, die das Schalterelement zur Erzeugung der frequenzmodulierten Wechselspannungsimpulse ansteuern,
Figur 4 ein Blockdiagramm für eine rechteckförmige Frequenzmodulation des Ausgangssignales eines Wechselrichters,
Figur 5 einen Ausgangszweig eines selbstschwingenden - kapazitiv oder induktiv - rückgekoppelten Wechselrichters mit einem serienresonanten Lastkreis und einer Frequenzsteuer-Eingriffsmöglichkeit,
Figur 5a einen alternativen Lastkreis zu Fig. 5.
Figur 6 bis Figur 8 Diagramme von Strom- und Spannungsverläufen, für den frequenzalternativen Betrieb,
Figur 9 den Stromverlauf für den kontinuierlichen periodischen Betrieb,
Figur 10 und 11 den Zündvorgang.

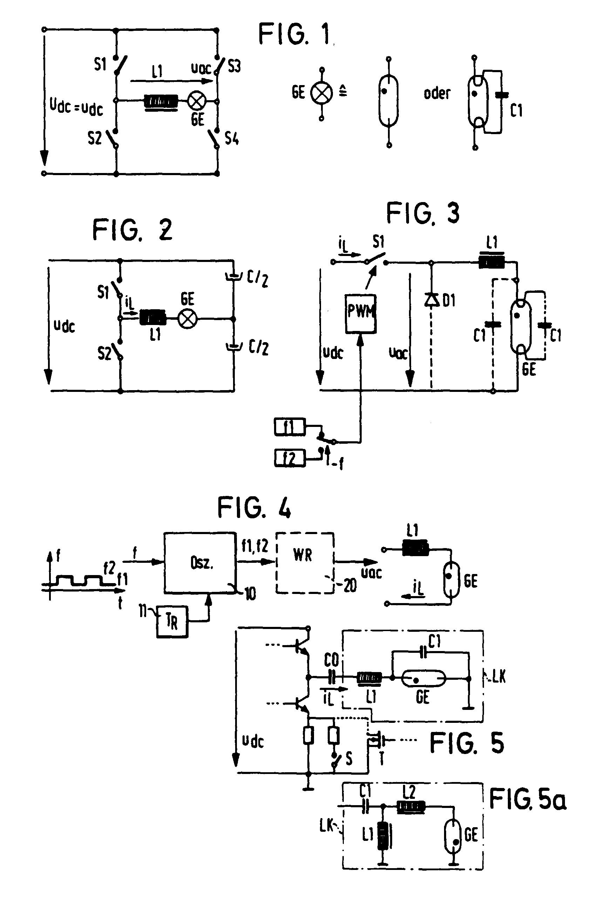

Figur 1 zeigt ein typisches Erscheinungsbild einer mit vier Schalterelementen S1, S2, S3, S4 ausgestatteten Vollbrücke, die einen Lampen-Lastkreis, bestehend aus einer Drossel L1 und einer Gasentladungslampe GE, in ihrem Brückenzweig aus einer Gleichspannung U_{dc}= udc speist. Diese Gleichspannung kann aus einer Batterie gewonnen sein, sie kann ebenso eine gleichgerichtete und geglättete Wechselspannung, z.B. die 220V/50Hz Netzspannung sein. Als Lampenarten kommen die im rechten Teilbild der Figur 1 gezeichneten Gasentladungslampen infrage, z.B. eine Hochdruck- oder eine Niederdruck-Gasentladungslampe. Ebenso kann eine direkt, indirekt oder gar nicht beheizte Lampe Verwendung finden. Abhängig von der Verwendung einer der vorgenannten Lampenarten kann ein Zünd-Kondensator C1 Einsatz finden. Dieser ist entweder parallel zu den Elektroden der unbeheizten Lampe GE zu schalten oder, sofern eine beheizte Lampe verwendet wird, in der üblichen Schaltungsart, bei der der Kondensator C1 jeweils einen Anschluß der gegenüberliegenden Heizwendeln verbindet.

Die Brückenschaltung wird nun in der Weise betrieben, daß die jeweils diagonal gegenüberliegenden Schalter S1, S4 und S2, S3 synchron miteinander geschaltet werden, so daß dem Lastkreis im Brückenzweig eine bipolare Wechselspannung u_{ac} hoher und steuerbarer Frequenz zuführbar ist.

Auf vergleichbare Weise arbeitet die Halbbrückenschaltung gemäß Figur 2, bei der ein Schalterelementenpaar durch einen wechselspannungsmäßigen Mittelpunkt (mittels zweier C/2 Kapazitäten) ersetzt worden ist. Das verbleibende Schalterpaar S1, S2 wird hierbei jedoch nicht alternierend geschaltet, es wird jeweils nur einer der beiden Schalter für eine vorgesehene Stromrichtung im Lastkreis getaktet. Ist der Laststrom i_{L} positiv, so genügt ein Takten des Schalters S1; ist der Laststrom i_{L} negativ, so muß lediglich der Schalter S2 getaktet werden. Wie in Figur 1 sind hierbei selbstverständlich Freilaufdioden vorgesehen, die jeweils parallel zu den Schalterelementen vorgesehen sind - jedoch nicht eingezeichnet worden sind.

Figur 3 zeigt einen Tiefsetzsteller, der aus vorbezeichneter Gleichspannung Udc über einen Schalter S1 den Lastkreis L1 GE mit Spannungsimpulsen beaufschlagt und hierbei einen Laststrom i_{L} in der Lampe GE einprägt. Wie in den vorangegangenen Figuren ist auch hier lediglich eine einzige Drossel L1 vorgesehen. Die GE-Lampe kann auch auf verschiedene Weisen mit Zünd- bzw. Glättungskondensatoren C1 beschaltet sein, zum einen parallel zu einer unbeheizten Gasentladungslampe oder zum anderen in Verbindung zweier gegenüberliegender Heizwendel. Die Glättung bzw. Zündung erfolgt über den bereits erwähnten Kondensator C1.

Weiterhin ist in Figur 3 eine Ansteuerung des Schalterelements S1 schematisch skizziert, eine solche kann ebenso Anwendung finden für die vorangegangenen Figuren. Hierbei wird mit einer Modulationsfrequenz f jeweils eine von zwei Festfrequenzen f1, f2 ausgewählt und dem Schalterelement S1 über geeignete Ansteuermaßnahmen ggfs. potentialfrei oder potentialverschobenen zugeführt. Die beiden Festfrequenzen f1, f2 sind diejenigen Frequenzen, die für einen Hauptpuls bzw. einen Haltestrompuls benötigt werden. So ist die Frequenz f1 in der Größenordnung von 20kHz gewählt, dies stellt die geringe Frequenz dar, bei der dem Lastkreis der Hauptstrompuls zugeführt wird. Seine Stromamplitude beträgt zwischen 1A und 50A. Nach Umschalten über die Modulationsfrequenz f wird die höhere Frequenz f2 an das Schalterelement S1 geführt. Sie bewirkt den im Stromwert geringeren Haltestrompuls. Er liegt bei einer Frequenz von 60kHz bis 200kHz in einem Stromwertebereich von 50mA bis 500mA. Die Modulationsfrequenz f ist hierbei so gewählt, daß die Stromwerte als Hauptstrompuls und Haltestrompuls im Zeitmittel gerade der GE-Lampe die Nennleistung zuführen - obwohl der Hauptstrompuls ihr kurzzeitig eine wesentlich höhere Leistung zuführt, als die Nennleistung. Hierdurch wird der Effekt erreicht, daß die Hochdrucklampen in der Farbtemperatur und der Lichtausbeute veränderbar und verbesserbar sind, gleichzeitig aber ihre Nennlast nicht überschritten wird. Der Haltestrom, der auch als "keep alive current" bezeichnet wird, sorgt in der Erholphase der Lampe dafür, daß sie ionisiert bleibt, d.h. leitend bleibt, und vor erneutem Einsetzen des Hauptstrompulses keine neue Zündung vorgenommen werden muß.

Bisher unerwähnt blieben die Realisierungen der Schalterelemente S1,...,S4; sie werden in der Regel von Bipolartransistoren gebildet, allerdings sind ebenso MOS-FET-Transistoren oder RET-Transistoren einsetzbar.

Wie bereits die anhand von Figur 3 erläuterte Steuerschaltung, zeigt nun Figur 4 eine vergleichbar aufgebaute Steuerschaltung. Sie kann ebenso in den Schaltbeispielen gemäß Figur 1 bis Figur 3 Einsatz finden. Die Umschaltung der Festfrequenzen f1, f2 erfolgt hierbei unmittelbar über einen frequenzsteuerbaren Oszillator 10, dem das Steuersignal f - welches frequenzbestimmend ist - zugeführt wird. Ein solcher Oszillator kann ein VCO sein, die Höhe der Spannung f bestimmt die Ausgangsfrequenz f1, f2 des Oszillators 10. Auch kann die Form der Frequenzänderung, d.h. die Frequenzmodulation, einfacher verändert werden, z.B. sinusähnlich, dreieckförmig oder andere geeignete Formen annehmen, lediglich die Spannungsform von f wird angepaßt. In Figur 4 ist im linken Bildteil beispielhaft ein rechteckförmiger Verlauf der Frequenzmodulation f gezeigt, er ist vergleichbar mit der Umschaltung der Festfrequenzen gemäß Figur 3, da er so wirkt, daß alternativ entweder die Frequenz f1 oder die Frequenz f2 vom Oszillator 10 dem Umrichter 20 - der in einer der zuvor erläuterten Umrichterschaltungsarten aufgebaut ist - zugeführt wird. Der Umrichter 20 gibt die Spannungsimpulse u_{ac} dann an den Lastkreis L1, GE ab und bewirkt in diesem einen Strom i_{L} den es zu pulsen gilt.

Der Oszillator 10 wird in Figur 4 noch durch eine monostabile Kippstufe 11 ergänzt, die eine Frequenzalternation, bzw. eine Frequenzmodulation über das Eingangssignal f für eine vorgegebene Zeitspanne T_{R} zum Einschaltzeitpunkt unterbindet. Diese Unterbindung führt dazu, daß dem Wechselrichter eine vorbestimmte Festfrequenz, beispielsweise nur die Frequenz f2, oder annähernd die Lastkreisresonanzfrequenz f0 während der Zündungszeit T_{R} zugeführt wird. Die Zündungszeit kann im Bereich von einigen Millisekunden bis Sekunden liegen und ermöglicht es, in der Lampe eine genügende Ionisation aufzubauen und sanft zu zünden. Lampentypabhängig kann die Zündzeit T_{R} dabei verändert werden, je nachdem, ob eine zündfreundliche oder eine weniger zündwillige Lampe eingesetzt wird.

In Figur 5 wird ein selbstschwingender Wechselrichter eingesetzt, an den sich ein Koppelkondensator C0, eine Drossel L1 und eine Gasentladungslampe GE, sowie einen Glättungskondensator C1 parallel zu letzterer, anschließen. Der dadurch gebildete serienresonannte Lastkreis LK weist eine Resonanzfrequenz f0 in der Größenordnung von 1kHz bis 60kHz auf, die durch L1 und C1 bestimmt wird. Er wird aus dem - hier lediglich dargestellten - Ausgangszweig des selbstgeführten Wechselrichters (Resonanzumrichter) gespeist, der seinerseits die Nutzenenergie aus der Versorgungsgleichspannung Udc bezieht. Im Emitterkreis des unteren, der in Serie geschalteten Leistungstransistoren, ist ein veränderbarer Emitterwiderstand vorgesehen.

In Figur 5a ist ein alternativer Lastkreis gezeigt, bei dem die Resonanzfrequenz f0 ebenfalls von L1 und C1 bestimmt wird, wenn L2 < < L1 ist.

Die Veränderung des derart eingefügten Emitterwiderstandes erlaubt die gewünschte Frequenzmodulation, die bei einem serienresonanten Lastkreis zu einer Amplitudenmodulation des im Lastkreis fließenden Stromes i_{L} führt. Die Veränderung - auch Modulation - des Emitterwiderstandes kann wohl durch Parallelschalten von anderen Emitterwiderständen, als auch durch Überbrücken des Emitterwiderstandes oder durch Veränderung mittels parallelgeschaltetem Steuerelement (MOS-FET-Transistor T) erfolgen. Eine Veränderung des Emitterwiderstandes bewirkt eine frühere oder spätere Stättigung eines - hier nicht eingezeichneten - induktiven Koppelelementes, das den Laststromkreis mit der Ansteuerung der Transistoren des Ausgangskreises verbindet. Seine Sättigung verändert sodann die Frequenz des selbstschwingenden Wechselrichters womit das Ziel erreicht wird, die Ausgangsfrequenz der Wechselspannungsimpulse des Wechselrichters zu modulieren. Neben der erläuterten Möglichkeit der Veränderung des Emitterwiderstandes eines Ausganstransistors des Ausgangszweiges kann die Frequenzmodulation auch durch Belastung einer Hilfswicklung oder einer Steuerwicklung des induktiv koppelnden Übertragers, der die Schwingung sicherstellt, bewirkt werden.

Anstelle eines selbstgeführten Wechselrichters kann natürlich auch ein fremdgeführter Wechselrichter, beispielsweise gemäß Fig. 1 oder Fig. 2 eingesetzt werden. Die Spannungsfrequenzmodulation bewirkt eine Strom-Amplitudenmodulation. Diese Modulation kann in einer vorgegebenen Modulationstiefe erfolgen, die dann dem Hauptstrompuls und dem Haltestrompuls in den Figuren 1 bis 3 entspricht. Die Amplitudenmodulation erfolgt mit einer Frequenz von 50Hz bis 1000Hz, so daß sie für das Auge unsichtbar bleibt. Vorteilhaft ist hierbei, daß kontinuierlich eine Vielzahl von Frequenzen durchgestimmt werden, so daß eine spezifische Frequenz - wie bei der stufigen Frequenzalternation - nicht vorliegt und stehende Wellen, die zu optischen Wellen und zum Flackern der Lampen führen würden, außerordentlich gut vermieden werden.

Der Pulsbetrieb gemäß Figur 5 wird also durch Pulsieren der Einhüllenden des Ausgangsstroms mit einer Frequenz von 50Hz bis 1000Hz erreicht. Die Amplitudenmodulation, d.h. die Modulationstiefe, liegt im Bereich von 1:10 bis 1:1000.

Die Zündung der Lampe erfolgt entweder durch Anheben der Frequenz in die Nähe der Resonanzfrequenz f0, durch wahlweise eingekoppelte Hochsapnnungsimpulse oder durch längeres Anstehen einer hohen Zündspannung an der Gasentladungslampe GE. Zusätzlich erlaubt eine Tastverhältnisänderung (Pulsbreitenmodulation) die Steuerung und Veränderung der Ausgangsleistung, sprich der Helligkeit. Ebenso kann eine solche Helligkeitsvariation durch Frequenzveränderung erfolgen.

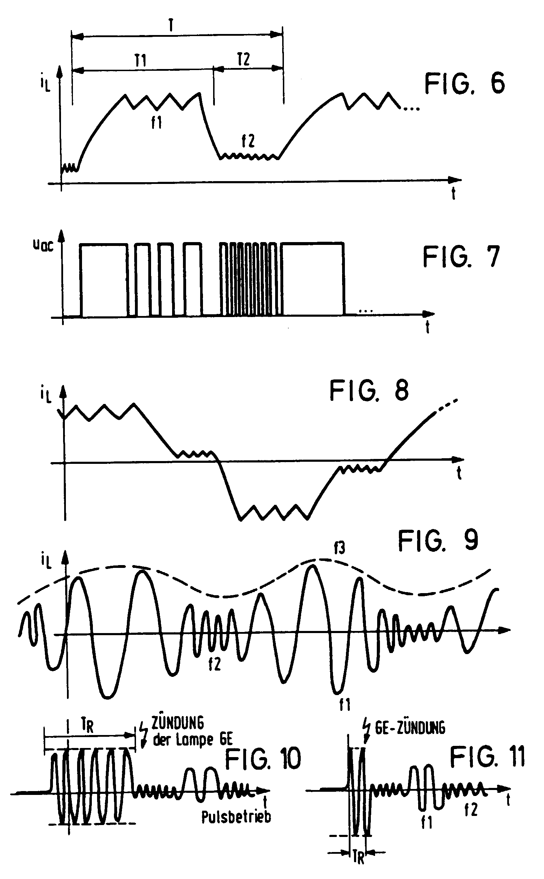

Im Experiment wurde bei einer Schaltung gemäß Figur 5 die Kurvenformen gemäß der Figur 9 erzielt. Die Modulation der Frequenz erfolgt in einem Bereich von 20kHz bis 70kHz, wobei die Resonanzfrequenz des Lastkreises bei ca. 30kHz liegt und die Modulation zwischen den vorbezeichneten Frequenzen während einer Zeitdauer von 20mec bis lmec (also zwischen 50Hz bis 1kHz) erfolgt.

Die Figuren 6 bis 11 zeigen nun Strom- und Spannungsverläufe, wie sie mit den soeben erläuterten Umrichtern 20 und den Steuerteilen 10 erreicht werden.

So zeigt die Figur 6 den Pulsbetrieb der Gasentladungslampe deutlich durch einen Strompuls hoher Amplitude mit der Frequenz f1, welche in der Größenordnung von 20kHz liegt. Hier wird der Lampe eine Leistung zugeführt, die erheblich oberhalb ihrer Nennleitung liegt, allerdings nur für ein kurzes Zeitintervall T1. Sodann wird die Frequenz auf die wesentlich höhere Frequenz f2 verändert, im Beispiel ca. 120kHz. Diese Frequenzalternation führt zu einem Absinken des Laststroms auf den nunmehr geringfügigen Haltestromwert während der Zeitdauer T2. Die beiden Zeitdauern T1 und T2 führen zu einer Periodendauer T, welche in der Größenordnung von 200Hz bis 500Hz liegt. Anschließend wird sich gemäß Figur 6 wiederum ein Hauptstrompuls, der die vorbezeichnete Frequenz f1 während des Zeitintervalles T1 aufweist. Ein solcher Stromverlauf gemäß Figur 6 ist mit einer Steuerschaltung gemäß Figur 4 und dem dort im linken Bildteil gezeigten Steuersignalverlauf f zu erreichen. Das Verhältnis der Stromstärken liegt im Bereich von 1 : 100 bis 1 : 1000, ihre Amplituden können sowohl durch Frequenzvariation f1, f2 als auch durch Pulsdauermodulation eines Pulsbreitenmodulator gemäß Figur 3 verändert werden; jedenfalls leibt die Lampe dabei in einem leitenden Zustand und wird im Zeitmittel nicht oberhalb ihrer Nennleistung betrieben.

Figur 7 zeigt das mit Figur 6 korrespondierende Diagramm des Wechselspannungsverlaufes am Ausgang des Wechselrichters und am Eingang des Lastkreises L1, GE. Hier wird noch einmal die Frequenzalternation deutlich, die nur schematisch dargestellt ist.

Die gezeigten Frequenzen und Frequenzverhältnisse entsprechen in ihrem Ausmaß nicht der tatsächlich erreichten Relation. Sie zeigen lediglich anschaulich den Wechsel der Frequenz und den dadurch erreichten pulsierenden Betrieb der GE-Lampe.

Figur 8 zeigt ein mit den Schaltungen der Figur 1 oder Figur 2 erreichbaren bipolaren Stromverlauf, der zur Lampenschonung beiträgt und eine gleichmäßige Nutzung der Elektroden erlaubt. Hier wird - wie in Figur 6 - ein Hauptstrompuls und ein Haltestrompuls mit deutlich unterschiedlichen Stromamplituden eingeprägt, jedoch wird wechseln, d.h. in jeder zweiten Periode T, das Vorzeichen des Stromes i_{L} invertiert. Dies wird beispielsweise mit der Schaltung gemäß Figur 2 erreicht, indem das Takten des Schalterelements S1 eingestellt wird, wodurch sich der Gleichstrom i_{L} auf Null abbaut. Sodann wird das Takten des Schalterelements S2 begonnen, womit der Gleichstrom i_{L} sich in die inverse Richtung aufbaut. Beide Betriebsweisen sind möglich, ein Haltestrompuls kann in einen - im Vorzeichen umgekehrten - Hauptstrompuls übergeleitet werden, ebenso können Haltestrompulse und Hauptstrompulse, die jeweils unterschiedliche Stromrichtungen aufweisen, ineinander übergeleitet werden.

Figur 9 zeigt den Stromverlauf, der bei einer Schaltungsanordnung gemäß Figur 5 erzielt wird, hier insbesondere bei sinusähnlicher Modulation der Frequenz über das ebenfalls sinusähnliche Verändern des Emitterwidestandes über einen Steuertransistor T; es führt zu der mit f3 in Figur 9 bezeichneten Amplitudenmodulation im serienresonanten Lastkreis der Figur 5. Auch hier gilt der Grundsatz, daß bei hohem Strom ein geringer Frequenzwert f1 und bei niedrigerem Strom i_{L} ein hoher Frequenzwert f2 vorliegt. Wiederum entsteht der vorteilhafte Effekt, daß bei hohen Strömen geringer Schalt- Frequenzen und bei geringen Strömen hohe Schalt-Frequenzen vorliegen, womit die Verlustleistung der Endstufe des selbstschwingenden Oszillators gering ist.

Anders als in Figur 6 oder Figur 8 wird hier kein Gleichstrom getaktet, sondern ein originärer Wechselstrom im Lastkreis eingeprägt, die Erhöhung seiner Frequenz bewirkt eine Reduktion der Schwingungsamplitude und damit einen geringeren Effektivwert. Die für Figur 6 und Figur 8 gemachten Aussagen hinsichtlich des Stromamplitudenwertes gelten demnach hier analog für den Effektivwert.

Schließlich zeigen die Figuren 10 und 11 das Einwirken der Zündschaltung 11, die für eine vorgegebene Zeit T_{R} eine hohe Wechselspannung an die Lampe GE vom Umrichter 20 anlegen läßt. Die monostabile Kippstufe 11 unterbindet beim Einschalten zunächst die stationär vorgesehene Frequenzmodulation oder Frequenzalternation f1, f2, indem sie die Ausgangsfrequenz des Umrichters 20 und des Oszillators 10 auf einem vorbestimmten - geringen - Wert hält. Dieser Wert liegt in der Nähe der Resonanzfrequenz f0, womit der noch ungedämpfte - die Lampe hat noch nicht gezündet - Resonanzkreis hohe Zündspannung zur Verfügung stellt.

Nach erfolgter Zündung wird die Einwirkung der monostabilen Kippstufe 11 auf den Oszillator 10 aufgehoben, so daß der stationäre Betrieb, d.h. die Modulation und Pulsation des Stromes einsetzen kann. Die so erzielte Zündung entspricht einem Kaltstart. Wenn erwünscht, kann durch Einsetzen des Zündkondensators C1 gemäß Figur 1 ein Warmstart vorgesehen werden.

Erlaubt der Pulsbetrieb von Gasentladungslampen eine Veränderung deren Charakteristika und eine Verbesserung ihrer Lichtausbeute, so wird dies gemäß den Ausführungsbeispielen der Figur 3 und entsprechenden Ansteuerung der Vorrichtung gemäß Figur 1 und 2 - durch Beibehaltung einer einzigen Drossel und alternierendem astabilen Wechsel zwischen zwei Frequenzen erreicht. Diese Frequenzmodulation führt zu einem Verändern der wirksamen Reaktanz f.L1, die einen Stromhauptpuls - bei geringer Frequenz - und einen Haltestrompuls - bei hoher Frequenz f2 - bewirkt. Die jeweiligen Amplituden und Zeitdauern T1, T2 der Pulse sind so abgestimmt, daß im Zeitmittel T der Lampe die Leistung P_{N} zugeführt wird. Der unmittelbaren Veränderung des Lampenstromes durch Frequenzmodulation der Spannung u_{ac} entspricht bei einem Wechselrichter gemäß Figur 5 oder Figur 1 oder 2 (mit entsprechender Ansteuerung) die mittelbar erreichte Amplitudenmodulation, die durch Frequenzmodulation eines Wechselspannungssignales, das einem Laskreis (L1,GE) zugeführt wird, bewirkt wird. Diese amplitudenmodulations- oder amlitudenmodulationsähnliche Einhüllende f3 bildet den vorher beschriebenen Pulsbetrieb nach. Seine Maxima entsprechen den Hauptstrompulsen, seine Minima den Haltestrompulsen. Wird die Art der Frequenzmodulation geändert, z.B. von einer sinusähnlichen Modulation in eine rechteckförmige Modulation z.B. durch schaltweise Veränderung des Emitterwiderstandes - so erfährt auch die Einhüllende f3 eine entsprechende Anpassung. Diese kann von einer Sinusform bis zu einer Rechteckform reichen.

Für den frequenzalternativen Betriebsfall verdient der im Laststrom durch die Glättungswirkung der Drossel verbleibende Welligkeitsanteil besondere Beachtung. Er darf einen vorgegebenen Grenzwert, der von der Höhe des jeweils aktiven Strompulses abhängig ist, nicht überschreiten. Wenn die Frequenz erhöht wird, sinkt der Strom, gleichzeitg bewirkt die höhere Frequenz, daß die Regelgenauigkeit ausreicht, also die Grenzen des Welligkeitsanteiles nicht überschritten werden. Die Welligkeitsamplitude bleibt damit im Verhältnis zum Gesamtstrom in etwa konstant bzw. liegt im tolerierbaren Bereich. Störende akustische sowie optische Wellen in der Lampe können gar nicht entstehen oder angeregt werden; die Lichtwirkung bleibt für den Betrachter gleichförmig.

Der Wahl des Drosselwertes L1 kommt ebenso Bedeutung zu, da er die Welligkeit, die gerade bestimmte Grenzen nicht überschreiten darf, bestimmt. Neben der Bestimmung des Drosselwertes kann aber auch durch Veränderung der Festfrequenzen f1, f2 - so in Figur 3 - eine Anpassung an einem vorgegebenen Drosselwert erzielt werden, womit die Strompulse ihrer Höhe nach in weiten Grenzen und relativ frei einstellbar sind. So können die Drossel und die genannten Frequenzen in einer Weise gewählt werden, daß der Abstand der zugelassenen Welligkeitsamplitude von dem kritischen Wert mehr oder weniger groß ist.

Das zuvor bereits angedeutete gleitende Verschieben der Steuerfrequenz hin oder weg von der Resonanzfrequenz f0 zu Zünd- und Helligkeitsregelungszwecken ist im Detail nicht weiter erläutert. Es kann jedoch sehr wohl im Sinne der Erfindung anwendungsspezifisch zusätzlich den hier beschriebenen Schaltungsanordnungen zum Pulsbetrieb von Lampen zugefügt werden. Dies hängt vom Anwendungsfall ab.

## Patentansprüche

1. Vorschaltgerät (EVG) zum Pulsbetrieb von Gasentladungslampen (GE-Lampe, GE), mit einer speisenden gepufferten Gleichspannung (Udc, U_{dc}), der die Nutzleistung für die Gasentladungslampen entnehmbar ist,
mit mindestens einem elektronischen Schalterelement (S1) oder mindestens einem solchen Schalterelementenpaar (S1, S2, S3, S4), welches eine Gasentladungslampe (GE-Lampe, GE) periodisch mit Spannungsimpulsen (u_{ac}) versorgt.
wobei die Spannungsimpulse (u_{ac}) über ein Steuersignal frequenzmoduliert (f1, f2) werden,
**dadurch gekennzeichnet**,
daß eine einzige Reaktanz, vorzugsweise eine Drossel (L1), zu der Gasentladungslampe (GE-Lampe, GE) in Reihe geschaltet ist,
daß die Frequenzmodulation stufig frequenzalternativ erfolgt, und
daß die Frequenzmodulation in der Weise erfolgt, daß dem Lastkreis (GE, L1) über die Schalterelemente (S1, S2, S3, S4) für ein vorgegebenes erstes Zeitintervall (T1) eine erste Frequenz (f1) zum Anlegen eines Hauptstromimpulses an die Gasentladungslampe (GE-lampe, GE) und für ein vorbestimmtes zweites Zeitintervall (T2) eine alternative höhere zweite Frequenz (f2) zum Anlegen eines niedrigeren Haltestromimpulses zugeführt wird, und
daß die Frequenzalternation gemäß einer Alternationsfrequenz (f3) des Steuersignals erfolgt.

2. Vorschaltgerät nach Anspruch 1,
**dadurch gekennzeichnet**,
daß die Frequenzmodulation im wesentlichen rechteckförmig ist.

3. Vorschaltgerät nach Anspruch 1 oder 2,
**dadurch gekennzeichnet**,
daß die frequenzmodulierten Spannungsimpulse (u_{ac}) pulsbreitenmodulierbar sind, wobei das dem oder den Schalterelementen (S1, S2, S3, S4) zuführbare Ansteuersignal durch einen Pulsbreitenmodulator (PWM) beeinflußbar ist.

4. Vorschaltgerät nach einem der vorhergehenden Ansprüche,
**dadurch gekennzeichnet**,
daß die erste Frequenz (f1) im Bereich 10 - 30 kHz und die zweite Frequenz (f2) im Bereich 50 - 120 KHz liegt, und
daß die Alternationsfrequenz (f3) im Bereich 200 - 500 Hz liegt.

5. Vorschaltgerät nach einem der vorhergehenden Ansprüche,
**dadurch gekennzeichnet**,
daß der GE-Lampe (GE) ein Glättungskondensator (C1) parallelgeschaltet ist und/oder in dem Lastkreis (GE,L1) ein Serienkondensator (C0) eingefügt ist.

6. Vorschaltgerät nach Anspruch 1,
**dadurch gekennzeichnet**,
daß das Schalterelement (S1) als Tiefsetzsteller geschaltet ist, wobei eine Freilaufdiode (D1) vorgesehen ist, die den Laststrom (i_{L}) des Lastkreises (GE,L1) dann aufnimmt, wenn das Schalterelement (S1) nichtleitend ist.

7. Vorschaltgerät nach Anspruch 1
**dadurch gekennzeichnet**,
daß die Schalterelemente (S1,S2,S3,S4) in Halb- oder Vollbrückenschaltung geschaltet sind, wobei ein Schalterelementenpaar (S1, S2) jeweils aus zwei in Serie geschalteten Leistungshalbleitern, wie MOS-FET- oder Bipolartransistoren, besteht und jeweils parallel zu der speisenden Gleichspannung (Udc) geschaltet ist und wobei der Lastkreis (GE,L1) in dem Brückezweig der Halb- oder Vollbrückenschaltung angeordnet ist.

8. Vorschaltgerät nach einem der vorhergehenden Ansprüche,
**dadurch gekennzeichnet**,
daß der Haupstromimpuls 1A-50A und der Haltestromimpuls 50mA-500mA beträgt.

9. Vorschaltgerät nach einem der vorhergehenden Ansprüche,
**dadurch gekennzeichnet**,
daß die Strompulse während einer Periodendauer (T), die der Summe des ersten und zweiten Zeitintervalles (T1,T2) entspricht eine positive Polarität und während der darauffolgenden Periodendauer (T) eine negative Polarität aufweisen.

10. Vorschaltgerät nach einem der vorhergehenden Ansprüche,
**dadurch gekennzeichnet**,
daß die Amplituden der jeweiligen Strompulse durch Variation der Frequenz (f1, f2) auf einen jeweiligen lampentyp (GE) iVm einer gewählten Reaktanz (L1) einstellbar sind.

11. Vorschaltgerät nach Anspruch 8 oder 9,
**dadurch gekennzeichnet**,
daß die Amplituden der jeweiligen Strompulse durch Variation des Tastverhältnisses veränderbar sind.

12. Vorschaltgerät nach einem der vorhergehenden Ansprüche,
**dadurch gekennzeichnet**,
daß die während einer Periodendauer (T) der Lampe (GE) zugeführte Gesamtleistung (P) aus erheblichem und geringfügigem Strompuls die Nennleistung (P_{N}) dieser nicht überschreitet.

13. Vorschaltgerät nach Anspruch 7 oder 2,
**dadurch gekennzeichnet**,
daß die kontinuierlich periodische Frequenzmodulation über einen Wechselrichter ausführbar ist, in dessen Lastkreis wenigstens die GE-Lampe und die Drossel (L1) eingefügt sind und
daß die vorgenannte Frequenzmodulation zu einer Amplitudenmodulation, vorzugsweise im Bereich 50Hz bis 1kHz des Lampenwechselstromes (i_{L}) führt und seine Modulationstiefe im Bereich 1:10 bis 1 : 1000 liegt.

14. Vorschaltgerät nach Anspruch 13,
**dadurch gekennzeichnet**,
daß die Modulationstiefe im wesentlichen der Amplitudendifferenz aus Hauptstrompuls und Haltestrompuls entspricht.

15. Vorschaltgerät nach Anspruch 2,
**dadurch gekennzeichnet**,
daß eine Steuerschaltung (11) vorgesehen ist, die die Frequenzalternation (f1, f2) oder sinusähnliche Modulation für einen vorgegebenen lampentypabhängigen Zeitraum (T_{Reset}-T_{R}) unterdrückt und erst nach dem vorgegebenen Zeitraum (T_{R}) die periodische Alternation oder Modulation (f1, f2) der Spannungsimpulse (u_{ac}) freigibt.

16. Vorschaltgerät nach Anspruch 15,
**dadurch gekennzeichnet**,
daß die Steuerschaltung (11) nach Art einer monostabilen Kippstufe jeweils zum Einschalt- bzw. Zündvorgang der GE-Lampe (GE) eingreift und ihren regulären Betrieb unbeeinflußt läßt,
wobei der jeweilige anfängliche Eingriff für den vorgegebenen Zeitraum (T_{R}) eine Frequenz (f2,f0) der Spannungsimpulse (u_{ac}) bewirkt, die nahe der Resonanzfrequenz des Lastkreises (GE,L1) mit ungezündeter Lampe liegt.

## Claims

1. Fluorescent lamp ballast (FLB) for the pulsed mode operation of gas discharge lamps (GD lamp, GD), with a buffer supply dc voltage (Udc, U_{dc}) from which the effective power for the gas discharge lamps can be taken,
comprising at least one electronic switch component (S1) or at least one such pair of switch components (S1, S2, S3, S4) which periodically supplies a gas discharge lamp (GD lamp, GD) with voltage pulses (u_{ac}),
where the voltage pulses (u_{ac}) are frequency modulated (f1, f2) via a control signal,
**characterized in that**
a single reactor, preferably a choke (L1) is connected in series to the gas discharge lamp (GD-lamp, GD),
that the frequency modulation occurs in stages at alternating frequency of frequency and
that frequency modulation occurs in such a way that for a first preset period of time (T1) a first frequency (f1) for applying a main current pulse to the gas discharge lamp (GD-lamp, GD) and for a second preset period of time (T2) an alternative second, higher frequency (f2) for applying a lower retaining current pulse is supplied to the load circuit (GD, L1) via the switch components (S1, S2, S3, S4),
and
that the frequency alternation occurs in accordance with an alternating frequency (f3) of the control signal.

2. Fluorescent lamp ballast according to Claim 1,
**characterized in that**
the frequency modulation is essentially square wave.

3. Fluorescent lamp ballast according to Claim 1 or 2,
**characterized in that**
the frequency modulated voltage pulses (u_{ac}) can be pulse width modulated whereby the control signal which is supplied to the switch components or switch components (S1, S2, S3, S4) can be affected by a pulse width modulator (PWM).

4. Fluorescent lamp ballast according to one of the foregoing Claims,
**characterized in that**
the first frequency (f1) lies within the range 10 - 30 kHz and the second frequency (f2) lies within the range 50 - 120 kHz, and
that the alternating frequency f3) lies within the range 200 - 500 Hz.

5. Fluorescent lamp ballast according to one of the foregoing Claims,
**characterized in that**
a filter capacitor (C1) is connected in parallel to the GD-lamp (GD) and/or a series capacitor (C0) is inserted into the load circuit (GD, L1).

6. Fluorescent lamp ballast according to Claim 1,
**characterized in that**
the switch component (S1) is connected in the form of a low set actuator in which a recovery diode (D1) is fitted which then absorbs the load current (i_{L}) of the load circuit (GD, L1) when the switch component (S1) is non-conducting.

7. Fluorescent lamp ballast according to Claim 1
**characterized in that**
the switch components (S1, S2, S3, S4) are connected in half bridge or full bridge circuit in which each pair of switch components (S1, S2) consists of two series-connected power semiconductors such as MOS-FET or bipolar transistors and each of which is connected in parallel to the supply dc voltage (Udc) and in which the load circuit (GD, L1) is located in the bridge branch of the half bridge or full bridge circuit.

8. Fluorescent lamp ballast according to one of the foregoing Claims
**characterized in that**
the main current pulse is 1A - 50A and the retaining current pulse is 50 mA - 500 mA.

9. Fluorescent lamp ballast according to one of the foregoing Claims,
**characterized in that**
the current pulses over a period of time (T) which corresponds to the sum of the first and second periods of time (T1, T2) have a positive polarity and over the subsequent periods of time (T) have a negative polarity.

10. Fluorescent lamp ballast according to one of the foregoing Claims,
**characterized in that**
the amplitudes of the respective current pulses can be adjusted to suit a respective type of lamp (GD) iVm of a selected reactor (L1) by changing the frequency (f1, f2).

11. Fluorescent lamp ballast according to Claim 8 or 9,
**characterized in that**
the amplitudes of the respective current pulses can be altered by changing the pulse width repetition rate.

12. Fluorescent lamp ballast according to one of the foregoing Claims
**characterized in that**
the total power (P) out of significant and slight current pulses supplied to the lamp (GD) over a period of time (T) does not exceed their nominal power (P_{N})·

13. Fluorescent lamp ballast according to Claim 7 or 2,
**characterized in that**
the continuously periodic frequency modulation can be accomplished via a dc-ac converter, in the load circuit of which are inserted at least the GD lamp and the choke (L1) and
that the aforementioned frequency modulation leads to an amplitude modulation, preferably within the range 50Hz to 1kHz of the alternating current of the lamp (i_{L}), and its modulation depth lies within the range 1:10 to 1:1000.

14. Fluorescent lamp ballast according to Claim 13,
**characterized in that**
the modulation depth essentially corresponds to the difference in amplitude from the main current plus and retaining current pulse.

15. Fluorescent lamp ballast according to Claim 2,
**characterized in that**
a control circuit (11) is provided which suppresses the frequency alternation (f1, f2) or sinusoidal modulation for a specified period of time (T_{Reset} T_{R}) which is dependent upon lamp type and trips the periodic alternation or modulation (f1, f2) of the voltage pulses (u_{ac}) only after the specified period of time (T_{R}).

16. Fluorescent lamp ballast according to Claim 15,
**characterized in that**
each control circuit (11), in the manner of a monostable flip-flop intervenes for the starting or ignition process of the GD lamp (GD) and leaves its regular operation unaffected,
whereby the respective initial engagement for the specified period of time (T_{R}) leads to a frequency (f2, f0) of the voltage pulses (u_{ac}) which is close to the natural frequency of the load circuit (GD, 11) when the lamp is not ignited.

## Revendications

1. Ballast électronique pour le fonctionnement en mode pulsé de lampes à décharge dans un gaz (GE) à l'aide d'une tension continue d'alimentation (Udc, U_{dc}) à laquelle peut être prélevée la puissance utile pour les lampes à décharge, comprenant au moins un élément interrupteur électrique (S1) ou au moins une paire d'éléments interrupteurs électroniques (S1, S2, S3, S4) alimentant une lampe à décharge (GE) périodiquement avec des impulsions de tension (u_{ac}), les impulsions de tension (u_{ac}) étant modulées en fréquence (f1, f2) par un signal de commande, caractérisé par le fait qu'une réactance unique, de préférence une inductance (L1), est montée en série avec la lampe à décharge (GE), que la modulation de fréquence s'effectue avec changement de fréquence, que la modulation de fréquence s'effectue de telle manière que pendant un premier intervalle de temps (T1) prédéterminé, une première fréquence (f1) est envoyée au circuit de charge (GE, L1) en passant par les éléments interrupteurs (S1, S2, S3, S4), en vue de l'application d'une impulsion de courant principal à la lampe à décharge (GE), et que pendant un deuxième intervalle de temps (T2) prédéterminé, une seconde fréquence (f2) plus élevée y est envoyée en vue de l'application d'une impulsion de courant de maintien plus faible, et que le changement de fréquence s'effectue selon la fréquence de changement (f3) du signal de commande.

2. Ballast suivant la revendication 1, caractérisé par le fait que la modulation de fréquence s'effectue de façon essentiellement rectangulaire.

3. Ballast suivant la revendication 1 ou 2, caractérisé par le fait que les impulsions de tension (u_{ac}) modulées en fréquence peuvent être modulées en largeur d'impulsion, le signal de commande appliqué à l'élément interrupteur ou aux éléments interrupteurs (S1, S2, S3, S4) étant modulé par un modulateur de largeur d'impulsion (PWM).

4. Ballast suivant l'une des revendications précédentes, caractérisé par le fait que la première fréquence (f1) est située dans la plage de 10 à 30 kHz et la deuxième fréquence (f2) dans la plage de 50 à 120 kHz, et que la fréquence de changement (f3) est située dans la plage de 200 à 500 Hz.

5. Ballast suivant la revendication précédente, caractérisé par le fait qu'un condensateur de lissage (C1) est monté en parallèle avec la lampe à décharge (GE) et/ou qu'un condensateur série (C₀) est inséré dans le circuit de charge (GE, L1).

6. Ballast suivant la revendication 1, caractérisé par le fait que l'élément interrupteur (S1) est monté en tant que gradateur, une diode roue libre (D1) étant prévue pour conduire le courant de charge (i_{L}) du circuit de charge (GE, L1) lorsque l'élément interrupteur (S1) n'est pas conducteur.

7. Ballast suivant la revendication 1, caractérisé par le fait que les éléments interrupteurs (S1, S2, S3, S4) sont montés en demi-pont ou pont complet, une paire d'éléments interrupteurs (S1, S2) étant constituée respectivement de deux semi-conducteurs de puissance tels que transistors MOS-FET ou transistors bipolaires en série, et étant montés respectivement en parallèle avec la tension continue d'alimentation (Udc) et le circuit de charge (GE, L1) étant disposé dans la branche du demi-pont ou pont complet.

8. Ballast suivant l'une des revendications précédentes, caractérisé par le fait que l'impulsion de courant principal vaut de 1A-50A et l'impulsion de courant de maintien de 50mA-500mA.

9. Ballast suivant l'une des revendications précédentes, caractérisé par le fait que les impulsions de courant présentent une polarité positive pendant une période (T) qui correspond à la somme du premier et du deuxième intervalles de temps (T1, T2) et présentent une polarité négative pendant la période (T) suivante.

10. Ballast suivant l'une des revendications précédentes, caractérisé par le fait que les amplitudes des impulsions de courant sont réglables par variation de la fréquence (f1, f2) pour l'adaptation à un type de lampe (GE) et à une réactance (L1) choisie.

11. Ballast suivant la revendication 8 ou 9, caractérisé par le fait que les amplitudes des impulsions de courant sont variables par variation du rapport de cycle.

12. Ballast suivant l'une des revendications précédentes, caractérisé par le fait que la puissance totale (P) amenée à la lampe (GE) pendant une période (T) et correspondant à une impulsion de courant élevée et une impulsion de courant basse ne dépasse pas la puissance nominale (P_{N}) de la lampe.

13. Ballast suivant la revendication 7 ou 2, caractérisé par le fait que la modulation de fréquence périodique continue est réalisée par un onduleur dont le circuit de charge contient au moins la lampe (GE) et l'inductance (L1) et que la modulation de fréquence précitée conduit à une modulation d'amplitude, de préférence dans la plage de 50Hz à 1kHz du courant alternatif de lampe (i_{L}), sa profondeur de modulation étant comprise entre 1:10 et 1:1000.

14. Ballast suivant la revendication 13, caractérisé par le fait que la profondeur de modulation correspond sensiblement à la différence d'amplitudes de l'impulsion de courant principal et de l'impulsion de courant de maintien.

15. Ballast suivant la revendication 2, caractérisé par le fait qu'il est prévu un circuit de commande qui supprime le changement de fréquence (f1, f2) ou la modulation sinusoïdale pour un intervalle de temps (T_{Reset}-T_{R}) prédéterminé, qui est fonction du type de lampe, et ne libère le changement périodique ou la modulation (f1, f2) des impulsions de tension (u_{ac}) qu'après l'intervalle de temps (T_{R}) prédéterminé.

16. Ballast suivant la revendication 15, caractérisé par le fait que le circuit de commande (11) intervient à la manière d'un étage basculeur monostable respectivement pour la mise en route ou l'allumage de la lampe (GE) et n'influe pas sur son fonctionnement régulier, l'intervention initiale pendant l'intervalle de temps prédéterminé (T_{R}) conduisant à une fréquence (f2, f0) des impulsions de tension (u_{ac}) qui est proche de la fréquence de résonance du circuit de charge (GE, L1) avec lampe non allumée.
